# EUROPÄISCHE PATENTANMELDUNG

(11) **EP 2 204 598 A1**
(43) Veröffentlichungstag der Anmeldung: **07.07.2010**
(21) Anmeldenummer: 10156302.1
(22) Anmeldetag: 04.06.2004
(51) Int. Cl.: F16L 33/207, F16L 13/00, F16L 13/14

(54) **Presshülse und Verfahren zum Aufbringen einer Presshülse**

(30) Priorität: 17.06.2003 DE 10327503
(62) Teilanmeldung aus: 04013236.7
(71) Anmelder: Postler, Stefan, 97461 Hofheim (DE)
(72) Erfinder:
(74) Vertreter: Müller, Enno

(57) **Zusammenfassung**

Die Erfindung betrifft eine Presshülse (2) zur Verpressung eines zwischengeschobenen Verbundrohres (4) auf einem Pressfitting zur Halterung des eingeschobenen Rohres, wobei die Presshülse (2) in Einschubrichtung des Rohres in ihrem vorderen Ende eine radial nach innen gerichtete Abwinklung (13) aufweist, die zur Halterung der Presshülse (2) an dem Pressfitting durch Eingriff in eine Nut (14) an dem Pressfitting ausgebildet ist, wobei weiter die Abwinklung (13) aus einer Mehrzahl von in Umfangsrichtung kreisabschnittsförmig freigeschnittenen Bereichen besteht. Die Erfindung betrifft darüber hinaus auch ein Verfahren zum Aufbringen einer solchen Presshülse auf einen Pressfitting, bei welchem die Abwinklungen beim Aufschieben der Presshülse auf den Pressfitting zum Überlaufen des Wulstes rückgepfeilt abgebogen werden und so mit der Nut (14) in Überdeckung kommen.

## Beschreibung

Die Erfindung betrifft zunächst eine Presshülse zur Verpressung eines zwischengeschobenen Verbundrohres auf einem Pressfitting zur Halterung des eingeschobenen Rohres, wobei die Presshülse in Einschubrichtung des Rohres an ihrem vorderen und/ oder hinteren Ende eine radial nach innen gerichtete Abwinklung aufweist, die zur Halterung der Presshülse an dem Pressfitting durch Eingriff in eine Nut an dem Pressfitting ausgebildet ist.

Weiter betrifft die Erfindung ein Verfahren zum Aufbringen einer Presshülse auf einen Pressfitting zur Verpressung eines zwischengeschobenen Verbundrohres, wobei die Presshülse in Einschubrichtung des Rohres an ihrem vorderen und/oder hinteren Ende eine radial nach innen gerichtete Abwinklung aufweist, die zur Halterung der Presshülse an dem Pressfitting durch Eingriff in eine Nut an dem Pressfitting ausgebildet ist.

Zum Stand der Technik ist zunächst etwa auf die DE 197 21 078 A1 zu verweisen. Hieraus ist es grundsätzlich bekannt, mittels eines Presswerkzeuges eine Presshülse auf einem Pressfitting zur Halterung eines eingeschobenen Rohres zu verpressen.

Weiter ist auf die DE 10010573 C1 zu verweisen. Bei der hieraus bekannten Presshülse ist an dem in Einschubrichtung des Rohres hinteren Ende eine radial nach innen gerichtete Abwinklung ausgebildet, die in eine Nut an dem Pressfitting eingereift. Die Abwinklung ist integral durchgehend über den gesamten Umfang ausgebildet.

Ausgehend von dem genannten Stand der Technik stellt sich der Erfindung die Aufgabe, eine Presshülse und ein Verfahren zum Aufbringen einer Presshülse auf einen Pressfitting anzugeben, bei dem die Presshülse vorteilhaft auf dem Pressfitting aufzubringen ist und ein günstiges Verfahren zur Verankerung der Presshülse auf dem Pressfitting angegeben ist, dies bei gleichzeitig möglichst günstiger Herstellbarkeit der Presshülse.

Diese Aufgabe ist hinsichtlich der Presshülse beim Gegenstand des Anspruches 1 gelöst, wobei darauf abgestellt ist, dass die Abwinklung aus einer Mehrzahl von in Umfangsrichtung kreisabschnittsförmig freigeschnittenen Bereichen besteht. Es sind so einzelne Abschnitte gebildet, die für sich jeweils einfacher und damit auch in der Summe leichter zu verbiegen sind. Denn auf eine Dichtigkeit kommt es in diesem Bereich nicht an. Nur auf eine zuverlässige, feste Halterung.

Hinsichtlich des Verfahrens ist die Aufgabe beim Gegenstand des Anspruches 2 gelöst, wobei darauf abgestellt ist, dass die Abwinklung aus einer Mehrzahl von in Umfangsrichtung kreisabschnittsförmig freigeschnittenen bereichen besteht und dass der Pressfitting einen eine Nut bildenden Wulst aufweist, wobei die Abwinklungen beim Aufschieben der Presshülse auf den Pressfitting zum Überlaufen des Wulstes rückgepfeilt abgebogen werden und dann mit der Nut in Überdeckung kommen. Die Nut kann so eine sehr geringe Tiefe aufweisen. Im Extrem kann es sich auch nur um einen Sockel handeln, der übergangslos in eine Flanke einläuft.

Da es sich bei den Presshülsen bevorzugt um einen weichgeglühten Stahl sehr geringer elastischer Verformungsfähigkeit handelt, kommt es sehr rasch zu einer plastischen Verformung in der beschriebenen Weise. Die elastische Rückfederung ist sehr gering. Ein weiteres Drücken in Richtung der Flanke des Wulstes an dem Pressfitting führt zu einem radialen Eindrücken des zugeordneten Endbereiches der Presshülse. Der Pressfitting kann zwei umlaufende Nuten zur Aufnahme von Dichtungsringen aufweisen. An dem Presswerkzeug können im Pressbereich mindestens zwei umlaufende Ausformungen ausgebildet sein. Die Ausformungen können als Rippen gebildet sein und im Verpresszustand kann eine erste Rippe einer ersten Nut des Pressfittings und eine zweite Rippe einer zweiten Nut des Pressfittings zugeordnet sein. Jedenfalls eine der Rippen kann in Überdeckung zu der ersten oder zweiten Nut ausgebildet sein. Dadurch, dass die Pressflächen des Presswerkzeuges rippenartig ausgebildet sind und zudem beide Pressflächen jeweils einer Nut mit darin aufgenommenem Dichtelement, wie insbesondere einem O-Ring zugeordnet sind, und eine Nut in Überdeckung zu einer Rippe ist, lässt sich auch unter ungünstigen Toleranzpaarungen ein zufriedenstellendes Verpressergebnis erzielen.

Bei den bekannten Verpressfittings, wozu beispielsweise wiederum auf die DE 197 21 078 A1 zu verweisen ist, sind die Nutwände jeweils in gleicher Höhe ausgebildet. Das Dichtelement überragt die Nutwände, kann aber auch vollständig hierin aufgenommen sein. Bei dem hier beschriebenen Verpressfitting können die Nutwände eine unterschiedliche Höhe aufweisen. Dadurch, dass eine unterschiedliche Höhe der Nutwände gegeben ist, ist die Öffnungsweite der Nut, bei Verbindung der Scheitel der Nutwände, größer als es der Breite der Nut entspricht. Eine Verdrängung von Material in die Nut beim Verpressen ist daher besser möglich. Zwar kann dies auch zu einer Beschädigung eines O-Ringes führen. Da aber aufgrund von Toleranzunterschieden nicht immer beide Nuten eines Pressfittings gleichmäßig beaufschlagt werden beim Verpressen, kann die Zerstörung eines O-Ringes hingenommen werden.

Darüber hinaus kann eine Nut als eigener Sägezahn gebildet sein, da die in Einschubrichtung erste Nutwand bevorzugt höher ausgebildet ist als die in Einschubrichtung zweite Nutwand und somit selbsttätig einem Zurückziehen des eingeschobenen Verbundrohres entgegenwirken kann.

Die Presshülse kann in Einschubrichtung des Rohres vorne eine radial nach außen vorstehende, sickenartig erste Ausformung aufweisen und eine weitere in Einschubrichtung des Rohres hinten an der Presshülse ausgebildete, nach außen vorstehende zweite Ausformung. Eine derartige Presshülse ist gleichfalls aus der bereits genannten DE 197 21 078 A1 bekannt. Die in Einschubrichtung hintere Ausformung ist allerdings mit einem sehr geringen Ausführungsgrad ausgebildet. Zudem sind die Ausformungen nicht in besonderer Weise an ein Presswerkzeug angepasst. Dies kann dazu führen, dass das Presswerkzeug nicht in dem gewünschten Bereich zur Verpressung angesetzt wird.

Insofern ist auch vorgeschlagen, dass ein Abstand in Einschubrichtung des Rohres zwischen der ersten und der zweiten Ausformung an die Breite eines zur Verpressung die Presshülse umfangenden Presswerkzeuges angepasst ist. Hierdurch ist erreicht, dass das Presswerkzeug, insbesondere an dem Presswerkzeug etwa ausgebildete Pressflächen oder Pressrippen, jeweils einem vorgegebenen Ort des Pressfittings zuverlässig zugeordnet sind.

Die zuverlässige Anordnung des Presswerkzeuges, mit daran auch noch ausgebildeten Pressrippen, in bevorzugter Zuordnung zu den Nuten des Pressfittings, führt insgesamt zu einem wiederholbar sehr zuverlässigen Pressergebnis.

Dadurch, dass die Abwinklung aus einer Mehrzahl von in Umfangsrichtung kreisabschnittsförmig freigeschnittenen Bereichen bestehen, sind einzelne Abschnitte gebildet, die für sich jeweils einfacher, und damit auch in der Summe leichter zu verbiegen sind. Denn auf eine Dichtigkeit kommt es in diesem Bereich nicht an. Nur auf eine zuverlässige, feste Halterung.

Nachstehend ist die Erfindung desweiteren anhand der beigefügten Zeichnung, die jedoch lediglich Ausführungsbeispiele darstellt, erläutert. Hierbei zeigt:
Fig. 1 eine Seitenansicht eines Pressfittings mit aufgesetzter Presshülse und Presswerkzeug (teilweise);
Fig. 2 eine Presshülse in Stirnansicht;
Fig. 3 eine Presshülse im Längsschnitt;
Fig. 4 eine Presshülse gemäß Fig. 3 aufgesetzt auf einen Pressfitting in der Seitenansicht;
Fig. 5 der Gegenstand gemäß Fig. 4 im Längsschnitt;
Fig. 6 der Gegenstand gemäß Fig. 5 mit eingeschobenem Verbundrohr und angedeutetem Presswerkzeug, vor der Verpressung;
Fig. 7 der Gegenstand gemäß Fig. 6 nach der Verpressung;

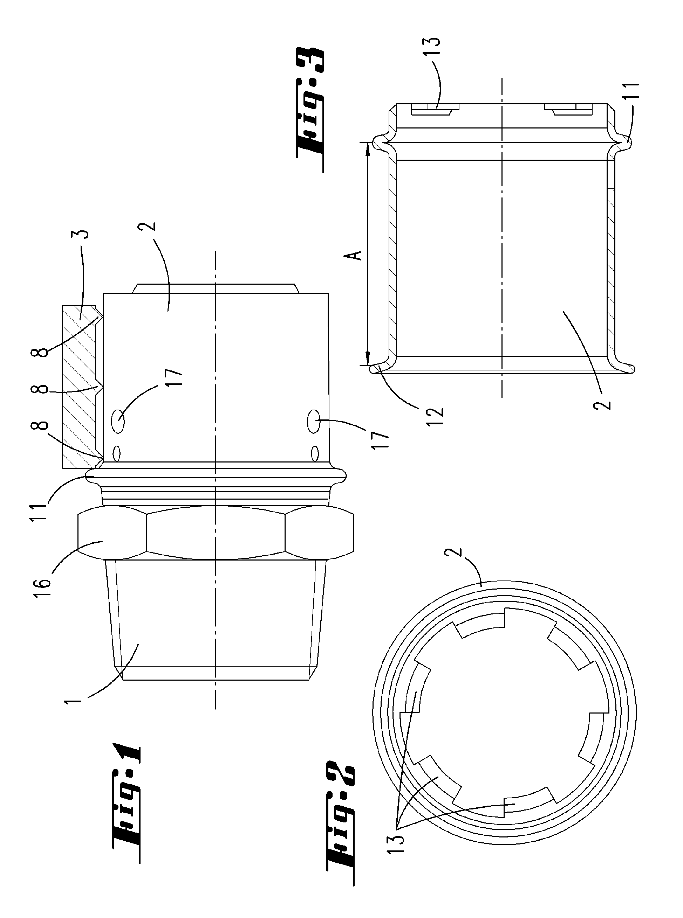

Dargestellt und beschrieben ist zunächst mit Bezug zu Fig. 1 ein Pressfitting 1 mit aufgeschobener und an dem Pressfitting gehalterter Presshülse 2 sowie aufgesetztem, jedoch lediglich angedeutetem Presswerkzeug 3.

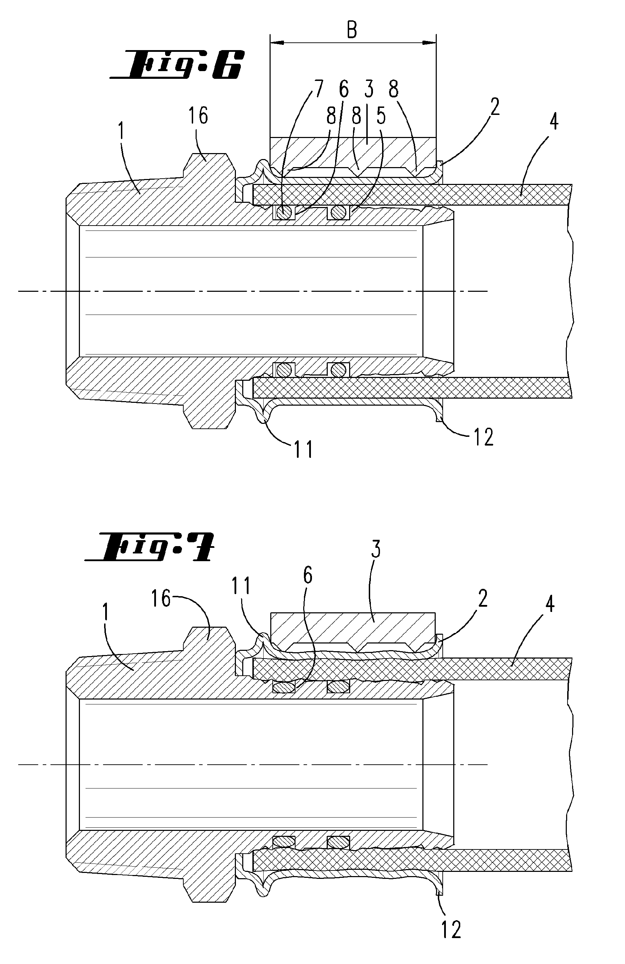

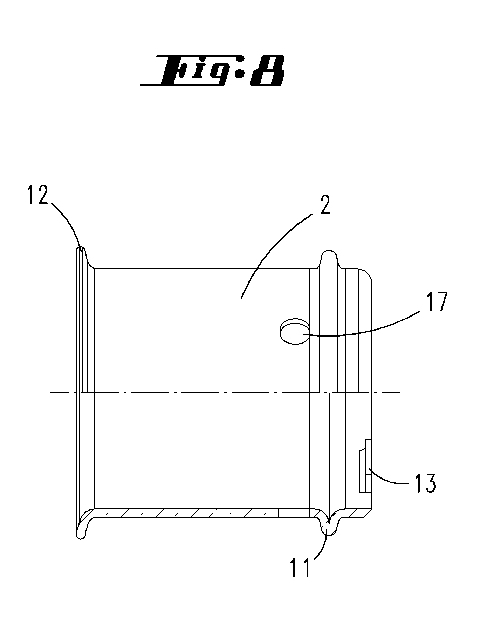

Wie in weiterer Einzelheit insbesondere Fig. 6 zu entnehmen ist, sind an dem Pressfitting eine in Einschubrichtung des Verbundrohres 4 erste Nut 5 und zweite Nut 6 ausgebildet, mit jeweils eingesetztem Dichtelement 7, hier in Form eines O-Ringes.

An dem Presswerkzeug 3 sind unterseitig, zugeordnet der Presshülse 2 umlaufende erste, zweite und dritte Rippen 8 ausgebildet.

Eine erste Rippe ist unmittelbar in Überdeckung zu der zweiten Nut 6 vorgesehen, während eine zweite Rippe in Nachbarschaft zu der ersten Nut 5 ausgebildet ist. Die Nachbarschaft ist derart dass der Abstand weniger als die Breite der Nut 5 beträgt. Die Pressrippen 8 haben einen dreiecksförmigen Querschnitt mit einer zu der Presshülse 2 weisenden Spitze.

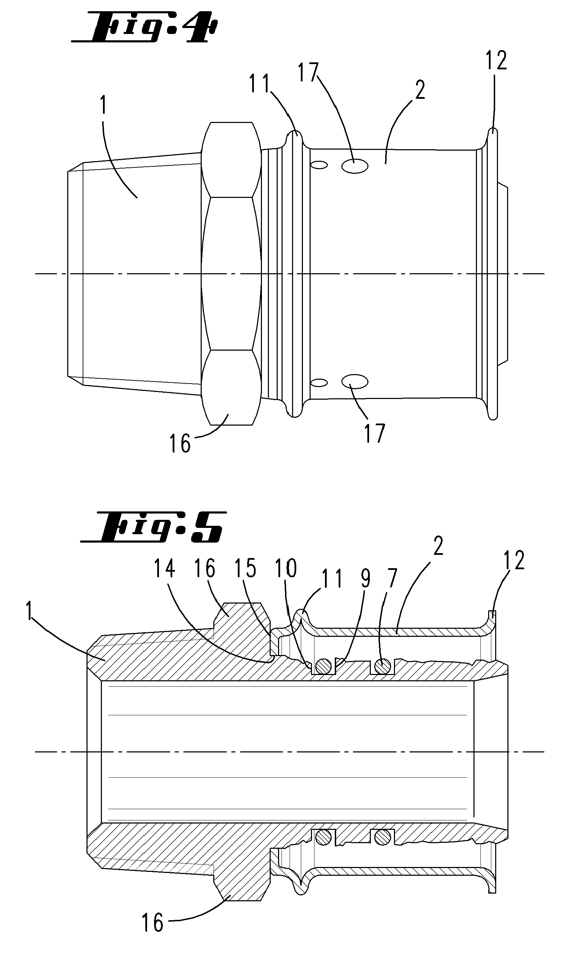

Der Verpressfitting selbst geht in seiner Ausgestaltung beispielsweise aus Fig. 5 hervor. Hierbei ist wesentlich, dass die Seitenwände der ersten bzw. zweiten Nut 5, 6, also die Seitenwände 9 und 10 unterschiedlich hoch ausgebildet sind. Die Seitenwand 9 ist höher ausgebildet als die Seitenwand 10. Das eingelegte Dichtelement, der O-Ring 7, überragt allerdings beide Seitenwände, naturgemäß die Seitenwand 9 weniger als die Seitenwand 10. Der O-Ring kann aber auch mit einer solchen Dicke vorgesehen sein bzw. die Seitenwände 9,10 mit einer solchen Höhe, dass jedenfalls die Seitenwand 9 den O-Ring bzw. das Dichtelement höhenmäßig überragt.

Aus dem Verpresszustand gemäß Fig. 7 ist zu erkennen, dass das Verbundrohr 4, es handelt sich beispielsweise um ein Aluminiumrohr, das innen- und/oder außenseitig von einem Kunststoffmantel überdeckt ist, stärker in die zweite Nut 6 und etwas geringer in die erste Nut 7 eingearbeitet ist, aufgrund der Verpressung. Hierbei mag es unter Umständen zu einer Beschädigung des O-Ringes in der zweiten Nut 6 kommen. Jedoch nicht in der ersten Nut 7. Auch wenn die Toleranzen so sind, dass etwa die in Einschubrichtung vordere Rippe 8 des Presswerkzeuges nicht in Überdeckung zu der zweiten Nut 6 liegen sollte, liegt dann aber die zweite Rippe 8 in Überdeckung zu der ersten Nut 5, so dass auch in solch ungünstigen Toleranzpaarungen eine sichere Verpressung erreicht ist.

Die Presshülse, die in Fig. 3 dargestellt ist, ist unterschiedlich zu der Presshülse, die in Fig. 1 dargestellt ist. Insbesondere ist bei der Presshülse gemäß Fig. 3 nicht nur eine sickenartige erste Ausformung 11 ausgebildet, sondern auch endseitig bezüglich der Einschubrichtung des Verbundrohres 4 eine zweite Ausformung 12. Ein axialer Abstand A zwischen den Ausformungen 11, 12 ist, wie sich etwa aus Fig. 6 ergibt, an eine zugeordnete Breite B eines Presswerkzeuges angepasst. Dies derart, dass das Presswerkzeug vollständig zwischen den Ausformungen 11, 12 bei der Verpressung aufgenommen ist.

Bezogen auf die Länge der Verpresshülse 2 sind insbesondere dann, wenn Rippen 8 an dem Presswerkzeug ausgebildet sind, diese immer in einer sehr genauen Zuordnung bezüglich der axialen Länge der Verpresshülse 2.

Die Presshülse 2 weist vorteilhafter Weise insbesondere, wie etwa aus Fig. 2 hervorgeht, Abwinklungen 13 auf, die zur Halterung der Presshülse 2 an dem Pressfitting 1 vorgesehen sind. Die Abwinklungen greifen in eine umlaufende Nut 14 des Pressfittings ein. Die Verpresshülse ist damit radial praktisch unbeweglich an dem Pressfitting 1 gesichert.

Die Abwinklungen 13 bestehen aus einer Mehrzahl von in Umfangsrichtung kreisabschnittsförmig freigeschnittenen Bereichen der Presshülse.

Beim Aufschieben der Presshülse 1 auf den Pressfitting 1 sind die Abwinklungen in einer ersten Ausführungsform so vorgesehen, dass sie an die Flanke eines die Nut 14 bildenden Wulstes stoßen und beim weiteren Aufschieben hierdurch rückgepfeilt (wenn auch nur wenig) abgebogen werden, bis sie den Wulst überlaufen können und so zur Überdeckung zu der Nut 14 kommen.

Die Nut 14 kann eine sehr geringe Tiefe aufweisen. Im Extrem kann es sich auch nur um einen Sockel handeln, der übergangslos in eine Flanke 15 (siehe auch weiter unten) einläuft. Da es sich bei den Presshülsen um einen weichgeglühten Stahl sehr geringer elastischer Verformungsfähigkeit handelt, kommt es sehr rasch zu einer plastischen Verformung in der beschriebenen Weise. Die elastische Rückfederung ist sehr gering. Ein weiteres Drücken in Richtung der Flanke 15 des Wulstes 16 (Mehrkantprofil) an dem Pressfitting 1 führt zu einem radialen Eindrücken des zugeordneten Endbereiches der Presshülse 1, an welchem die Ausformungen 13 ausgebildet sind. Gegebenenfalls kann aber auch noch durch radialen Druck diese Bewegung unterstüzt werden.

Eine Alternative sieht auch vor, dass die Ausformungen 13 zunächst nach vorne gepfeilt (im Querschnitt) angeordnet sind, so dass sie ohne weiteres den genannten Wulst überlaufen können. Durch Anlage an der Flanke 15 werden sie dann bis in die Senkrechte (mindestens) abgebogen und greifen so verriegelnd in die Nut 14 ein.

Von Bedeutung ist auch, dass an der Presshülse 1 eine oder mehrere Kontrollausnehmungen 17 ausgebildet sind. Diese Kontrollausnehmungen liegen, wie ersichtlich, unmittelbar neben der Ausformung 11, zugewandt der Ausformung 12. Nämlich derart, dass sie zumindest teilweise in Überdeckung mit der zweiten Nut 6 sind und so auch optisch das vollständige Aufschieben, jedenfalls bis über die zweite Nut 6 des Verbundrohres 4 kontrolliert werden kann. Wenn in der Ausnehmung das Verbundrohr erscheint, ist es jedenfalls auch in Überdeckung zu der zweiten Nut 6. Zudem kann die Ausnehmung auch wie an sich bekannt, zur Kontrolle bei Verpressung dienen. Hier kann ggf., sollte noch eine Undichtigkeit gegeben sein, Wasser austreten, also eine Undichtigkeit erkannt werden.

## Patentansprüche

1. Presshülse (2) zur Verpressung eines zwischengeschobenen Verbundrohres (4) auf einem Pressfitting zur Halterung des eingeschobenen Rohres, wobei die Presshülse (2) in Einschub-richtung des Rohres in ihrem vorderen und/oder hinteren Ende eine radial nach innen gerichtete Abwinklung (13) aufweist, die zur Halterung der Presshülse (2) an dem Pressfitting durch Eingriff in eine Nut an dem Pressfitting ausgebildet ist, **dadurch gekennzeichnet, dass** die Abwinklung (13) aus einer Mehrzahl von in Umfangsrichtung kreisabschnittsförmig freigeschnittenen Bereichen besteht.

2. Verfahren zum Aufbringen einer Presshülse (2) auf einen Pressfitting zur Verpressung eines zwischengeschobenen Verbundrohres, wobei die Presshülse (2) in Einschubrichtung des Rohres an ihrem vorderen und/oder hinteren Ende eine radial nach innen gerichtete Abwinklung (13) aufweist, die zur Halterung der Presshülse (2) an dem Pressfitting durch Eingriff in eine Nut an dem Pressfitting ausgebildet ist, **dadurch gekennzeichnet, dass** die Abwinklung (13) aus einer Mehrzahl von in Umfangsrichtung kreisabschnittsförmig freigeschnittenen Bereichen besteht, und dass der Pressfitting einen eine Nut (14) bildenden Wulst aufweist, wobei die Abwinklungen beim Aufschieben der Presshülse auf den Pressfitting zum Überlaufen des Wulstes rückgepfeilt abgebogen werden und so mit der Nut (14) in Überdeckung kommen.

3. Presshülse nach Anspruch 1 oder Verfahren nach Anspruch 2, **dadurch gekennzeichnet, dass** die Presshülse (2) in Einschubrichtung des Rohres vorne eine radial nach außen vorstehende, sickenartige erste Ausformung aufweist, dass eine weitere in Einschubrichtung des Rohres hinten an der Presshülse ausgebildete, nach außen vorstehende zweite Ausformung (12) beabstandet zu der ersten Ausformung vorgesehen ist.

4. Presshülse oder Verfahren nach Anspruch 3, **dadurch gekennzeichnet, dass** der in Einschubrichtung des Rohres zwischen der ersten und zweiten Ausformung (11,12) an die Breite eines zur Verpressung die Presshülse (2) umfangenden Presswerkzeuges (3) angepasst ist.

5. Presshülse oder Verfahren nach einem der Ansprüche 3 oder 4, **dadurch gekennzeichnet, dass** die zweite Ausformung (12) als im Querschnitt zumindest viertelkreisförmige Aufweitung geformt ist.

6. Presshülse oder Verfahren nach einem der vorhergehenden Ansprüche, **dadurch gekennzeichnet, dass** die Presshülse (2) im Bereich der Abwinklung (13) radial gestaucht ist.

7. Presshülse oder Verfahren nach einem der vorhergehenden Ansprüche, **dadurch gekennzeichnet, dass** die Presshülse (2) aus einem weichgeglühten Stahl geringer elastischer Verformungsfähigkeit besteht.

8. Presshülse oder Verfahren nach einem der vorhergehenden Ansprüche, **dadurch gekennzeichnet, dass** in der Presshülse (2), zugeordnet einer ein Dichtelement aufnehmenden Nut (5, 6) in dem Pressfitting (1), eine Kontrollausnehmung (17) ausgebildet ist.
